# EUROPÄISCHE PATENTSCHRIFT

(11) **EP 2 925 639 B1**
(45) Veröffentlichungstag und Bekanntmachung des Hinweises auf die Patenterteilung: **12.09.2018**
(21) Anmeldenummer: 13795496.2
(22) Anmeldetag: 25.11.2013
(51) Int. Cl.: B65D 85/804, A23F 3/14

(54) **PORTIONSKAPSEL ZUR HERSTELLUNG EINES CREMAFREIEN KAFFEEGETRÄNKS**
SINGLE SERVE CAPSULE FOR PRODUCING A COFFEE BEVERAGE WITHOUT CREMA
CAPSULE POUR PRÉPARER UNE BOISSON AU CAFÉ SANS CRÈME

(30) Priorität: 30.11.2012 DE 102012111684
(43) Veröffentlichungstag der Anmeldung: 07.10.2015
(73) Patentinhaber: K-fee System GmbH, 51469 Bergisch Gladbach (DE)
(72) Erfinder: EMPL, Günter, 51429 Bergisch Gladbach (DE); EPPLER, Wolfgang, 51465 Bergisch Gladbach (DE); THROM, Andre, 51103 Köln (DE)
(74) Vertreter: Loock, Jan Pieter
(86) Internationale Anmeldenummer: PCT/EP2013/074651
(87) Internationale Veröffentlichungsnummer: WO 2014/082975

(56) Entgegenhaltungen:
- EP-A1- 1 500 358
- EP-A1- 1 555 219
- WO-A1-2012/100975
- WO-A1-2012/123106
- US-A1- 2010 239 717
- US-A1- 2010 239 734
- US-A1- 2012 070 543

## Beschreibung

Die Erfindung betrifft eine Portionskapsel zur Herstellung eines Kaffeegetränks, wobei die Portionskapsel einen Kapselgrundkörper aufweist, in welchem ein textiles Flächengebilde und eine Getränkesubstanz angeordnet sind, wobei die Getränkesubstanz zur Aufbewahrung in der Portionskapsel und zur Extraktion in der Portionskapsel durch das textile Flächengebilde hindurch mittels druckbeaufschlagtem Heißwasser vorgesehen ist, wobei die Getränkesubstanz im Wesentlichen pulverförmig ausgebildet ist, gerösteten, gemahlenen Kaffee umfasst, und wobei das textile Flächengebilde ein Flächengewicht von mindestens 100 g/m² aufweist.

Portionierte Getränkezubereitungen in Kapsel- oder Padsystemen sind aus dem Stand der Technik allgemein bekannt. Beispielsweise sind in den Druckschiften EP 1792850 B1, EP 1344722 A1 und US 2003/0172813 A1 gattungsgemäße Portionskapseln zur Kaffee- und Espressozubereitung offenbart. Ferner wird auf die Druckschriften DE 102010034206, WO 2012/010317, WO 2012/038063 und DE 102011010534 verwiesen. Die Druckschrift EP 1 500 358 A1 offenbart ein Verfahren für das Ausgeben von Getränken aus Kapseln, die unter Druck extrahiert werden sollen und eine Substanz für die Herstellung eines Nahrungsmittelproduktes wie eines Getränks enthalten. Die Druckschrift US 2012 / 0 070 543 A1 betrifft eine Portionskapsel zur Herstellung eines Getränks, aufweisend einen Kapselkörper mit einem Kapselboden und einer Einfüllseite, wobei zwischen dem Kapselboden. Dem Fachmann ist aus der Druckschrift US 2010/239717 A1 eine Kapsel zur Zubereitung von Kaffee in einer Vorrichtung mit einem Kartuschenhalter mit Aussparungen und eingelassenen Elementen bekannt. Zum Stand der Technik gehört weiterhin die Druckschrift WO 2012/123106 A1, welche eine Portionskapsel zur Getränkeherstellung offenbart. Ferner sei auf die Druckschrift WO 2012/100975 A1 verwiesen, welche einen Halter und einen Einsatz zur Herstellung von Getränken durch Zentrifugieren offenbart. Die Druckschrift EP 1 555 219 A1 offenbart eine Portionskapsel mit gemahlenem Kaffee zur Herstellung eine Kaffeegetränks.

Portionskapseln zur Herstellung eines Getränkes sind bevorzugt kegelstumpfförmig oder zylindrisch geformt und werden beispielsweise aus einer tiefgezogenen Kunststofffolie oder im Kunststoffspritzverfahren hergestellt. Sie haben üblicherweise eine offene Einfüllseite mit einem Kragenrand, auf den eine Membran (Deckelfolie) aufgesiegelt oder aufgeklebt wird, einen geschlossenen oder offenen Kapselboden, wobei zwischen der Getränkesubstanz und dem Kapselboden ein oder mehrere Einbauelemente, wie beispielsweise ein Partikelsieb, ein Flüssigkeitsverteiler, ein Vlies, ein Filz, eine Absperrfolie und/oder dergleichen vorhanden sein können.

Für die Zubereitung eines Kaffeegetränkes wird die Portionskapsel in eine Brühkammer eines Zubereitungsgerätes eingebracht. Nach oder während des Schließvorganges der Brühkammer wird die Portionskapsel bevorzugt auf ihrer geschlossenen Bodenseite mittels eines in der Brühkammer angeordneten Ablaufdornes geöffnet. Portionskapseln mit partiell offenem Kapselboden besitzen bereits eine Öffnung auf ihrer Bodenseite. Nach dem Abdichten der Brühkammer wird die mit einer Membran oder Deckelfolie verschlossene Einfüllseite der Portionskapsel mittels Einstechmitteln angestochen. Anschließend wird Zubereitungsflüssigkeit, vorzugsweise heißes Wasser, unter Druck in die Portionskapsel gefördert. Die Zubereitungsflüssigkeit durchströmt die Getränkesubstanz und extrahiert und/oder löst die für die Getränkeherstellung benötigten Stoffe aus der Getränkesubstanz aus.

Bei der Zubereitung eines Espresso wirkt beispielsweise zum Extrahieren der ätherischen Öle ein Brühwasserdruck von bis zu 20 bar auf das Kaffepulver ein. Dieser Druck wirkt ferner auch auf das Filtermedium ein, welches sich zwischen dem Kaffeepulver und dem eingestochenen Kapselauslauf des Kapselbodens befindet. Der plötzliche Druckverlust auf der Unterseite des Filtermediums führt zur Schaumbildung im Getränk, beispielsweise in Form einer Crema eines Kaffeegetränks.

Crema erhält man durch die Feinheit der Partikel, das Filtersystem und einen hohen Druck im Extraktionsvolumen. Ist das System drucklos, entsteht keine Crema.

Für bestimmte Getränke, beispielsweise den klassischen Filterkaffee ohne Crema, welcher insbesondere in den USA und Skandinavien konsumiert wird, ist eine Schaumbildung jedoch unerwünscht.

Die zum Erhalt des gewünschten Getränkevolumens erforderliche Menge an gemahlenem Kaffee, welcher in einer Portionskapsel enthalten ist, steigt nahezu linear mit dem Getränkevolumen, wenn die weiteren Füllgutausprägungen wie Röst- und Mahlgrad dem Standard entsprechen.

Es ist bekannt, dass besonders bei Getränkemengen von mehr als 150 ml das zusätzliche Extrahieren des Kaffeemehls zum Ausschwemmen von unerwünschten Geschmackskomponenten führt, die dem Endprodukt einen bitteren, säuerlichen, schalen Geschmack verleihen. Naheliegende Korrekturmaßnahmen könnten sein, die Einwaage zu erhöhen oder die Kaffeebohnen feiner zu mahlen. Die Erhöhung der Einwaage führt jedoch zu einer schlechteren Extraktion, da die Teilchen nicht mehr gleichmäßig umspült werden können. Die Verringerung der mittleren Partikelgröße erhöht den Druck im Extraktionsraum. Dies führt zu einer zusätzlichen Extraktion von unerwünschten Inhaltsstoffen.

Im Stand der Technik existieren bereits Systemlösungen, die mit einem unveränderlichen, festgelegten Volumen der Portionspackung durchaus unterschiedliche Getränkeergiebigkeiten anbieten. Diese Systeme stellen allerdings einen überproportionalen Volumenvorrat der Portionspackung zur Verfügung.

Es besteht ein Bedarf an Portionskapseln zur Herstellung von Kaffeegetränken, welche eine einheitliche Größe haben und somit Teil einer Systemlösung sein können. Die Portionskapseln sollten eine hohe Ergiebigkeit für sensorisch einwandfreie Kaffeegetränke unterschiedlicher Volumina aufweisen.

Speziell besteht ein Bedarf an Portionskapseln zur Herstellung von bevorzugt cremafreien Kaffeegetränken mit Volumina von vorzugsweise über 80 ml, wobei der in der Portionskapsel enthaltene Kaffee in einem breiten Mahlgradbereich (ausgedrückt als D[4,3]-Wert) eingesetzt werden kann und gleichzeitig sensorisch gute Kaffeegetränke erhalten werden.

Beim D[4,3]-Wert handelt es sich um das mittlere Volumen D[4,3], welches eine dem Fachmann bekannte Messgröße ist und zur Beschreibung der mittleren Partikelgröße herangezogen werden kann.

Die Aufgabe der vorliegenden Erfindung bestand darin, Portionskapseln zur Herstellung von Kaffeegetränken bereitzustellen, welche Vorteile gegenüber den Portionskapseln des Standes der Technik haben.

Insbesondere sollten portionierte Getränkezubereitungen mit variablen, marktspezifischen Getränkeergiebigkeiten in einem vorgegebenen, kleinvolumigen nicht veränderbaren Verpackungs- oder Bevorratungsvolumen bereitgestellt werden. Die zu erzielenden variablen, marktspezifischen Getränkeergiebigkeiten sollten dabei vorzugsweise zwischen 80 ml und 350 ml liegen. Ferner sollten die erhaltenen Getränkezubereitungen sensorisch den in den bisher gebräuchlichen Zubereitungsgeräten zubereiteten Getränken entsprechen oder verbessert sein.

Ferner sollten Getränke erhalten werden, die keine Crema haben, die also den Getränken entsprechen, die mit Geräten druckloser Filtration zubereitet werden.

Außerdem sollte ein System gefunden werden mit welchem sensorisch einwandfreie Kaffeegetränke im höheren Volumenbereich (bevorzugt 80 bis 350 ml) hergestellt werden können, wobei der Mahlgrad (ausgedrückt als D[4,3]-Wert) in einem größeren Bereich variabel und frei wählbar ist.

Diese Aufgaben wurden durch die vorliegende Erfindung gelöst, d.h. eine Portionskapsel gemäß Anspruch 1.

Es wurde überraschend gefunden, dass durch die spezielle Kombination aus textilem Flächengebilde, insbesondere der Luftdurchlässigkeit und des Flächengewichts, Mahlgrad des Röstkaffees, Menge des im Extraktionsvolumen befindlichen Kaffees und Röstgrad das jeweilig zu erzielende Getränk mit der gewünschten Cremafreiheit sowie das gewünschte Getränkevolumen eingestellt werden können.

Erfindungsgemäß werden die Parameter Röstgrad, Mahlgrad und Menge des im Extraktionsvolumen befindlichen Kaffees (Einwaage) so variiert und aufeinander abgestimmt, dass auch mit niedrigen Einwaagen hohe Getränkevolumina erreicht werden können, die sensorisch den Vorgaben entsprechen. Die Ausbeute an Getränkevolumen pro Menge des im Extraktionsvolumen befindlichen Kaffees kann so verbessert werden.

Das Volumen der erfindungsgemäßen Portionskapsel liegt vorzugsweise im Bereich von 20 bis 35 mL.

In einer bevorzugten Ausführungsform beträgt das Volumen der erfindungsgemäßen Portionskapsel 25±10 mL, bevorzugter 25±8 mL, noch bevorzugter 25±6 mL, am bevorzugtesten 25±4 mL und insbesondere 25±2 mL.

In einer anderen bevorzugten Ausführungsform beträgt das Volumen der erfindungsgemäßen Portionskapsel 30±10 mL, bevorzugter 30±8 mL, noch bevorzugter 30±6 mL, am bevorzugtesten 30±4 mL und insbesondere 30±2 mL.

Die in der erfindungsgemäßen Portionskapsel enthaltene Getränkesubstanz ist im Wesentlichen pulverförmig ausgebildet und umfasst gerösteten, gemahlenen Kaffee.

Der Kaffee kann sortenrein sein oder aus einer Mischung von zwei oder mehreren beliebigen Kaffesorten bestehen.

In einer bevorzugten Ausführungsform umfasst die in der Portionskapsel enthaltene Getränkesubstanz eine oder mehrere Kaffeesorten ausgewählt aus Arabica, Robusta und Liberica.

In einer besonders bevorzugten Ausführungsform umfasst die in der Portionskapsel enthaltene Getränkesubstanz gerösteten, gemahlenen Kaffee, wobei der Kaffee eine Mischung der Kaffeesorten Arabica und Robusta ist.

In einer weiteren besonders bevorzugten Ausführungsform besteht die in der Portionskapsel enthaltene Getränkesubstanz aus geröstetem, gemahlenem Kaffee, wobei der Kaffee eine Mischung der Kaffeesorten Arabica und Robusta ist.

In einer bevorzugten Ausführungsform umfasst die in der Portionskapsel enthaltene Getränkesubstanz gerösteten, gemahlenen Kaffee, wobei der Kaffee ausschließlich Arabica-Kaffee ist.

In einer weiteren bevorzugten Ausführungsform umfasst die in der Portionskapsel enthaltene Getränkesubstanz gerösteten, gemahlenen Kaffee, wobei der Kaffee ausschließlich Robusta-Kaffee ist.

Der Kaffee kann entkoffeiniert sein.

Der Kaffee kann aromatisiert sein. Aromatisierter Kaffee wird vorzugsweise dadurch erhalten, dass die Kaffeebohnen nach dem Rösten mit natürlichen oder synthetischen Aromen oder Ölen versetzt werden.

Das Schüttgewicht des gerösteten, gemahlenen Kaffees beträgt je nach Sorte und Mahlgrad 250g/l bis 400g/l. Das Schüttgewicht wird mittels des Hag-Geräts bestimmt. Hierzu wird der gemahlene Kaffee in ein Gefäß mit bekanntem Volumen (250ml) gegeben, das vor dem Befüllen auf der Waage tariert wird. Der Kaffee wird im Überfluss in das Gefäß gefüllt und mit einem flachen Gegenstand am oberen Gefäßrand eben abgestreift. Das volle Gefäß wird gegen das Taragewicht gewogen und mittels eines dem Fachmann bekannten Faktors auf g/l umgerechnet.

Der geröstete, gemahlene Kaffee weist vorzugsweise eine spezifische Oberfläche im Bereich von 5 bis 90 m²/kg auf.

Bevorzugt beträgt die spezifische Oberfläche des Kaffees 5±3 m²/kg, 10±5 m²/kg, 15±1 m²/kg, 32±1 m²/kg, 45±1 m²/kg, 55±1 m²/kg, 58±1 m²/kg oder 60±5 m²/kg.

Der geröstete, gemahlene Kaffee weist vorzugsweise einen Wassergehalt im Bereich von 1 bis 5% auf.

Um Getränke mit unterschiedlichen Getränkevolumina - mit oder ohne Crema - zu erzielen, ist die Röstung der einzelnen Sorten ein wesentliches Element. Hierbei werden Geschmack und Farbe beeinflusst.

Der Röstgrad kann mit einem Farbmessgerät bestimmt werden (z.B. Colorette 3b von der Fa. Probat, Emmerich, Deutschland).

In einer besonders bevorzugten Ausführungsform ist die gesamte Menge des gemahlenen Kaffees, der in der Getränkesubstanz enthalten ist, geröstet.

Der geröstete, gemahlene Kaffee weist einen Farbwert (gemessen mit Colorette 3b der Fa. Probat, Baujahr 2011) in einem Bereich von bevorzugt 20 bis 170, bevorzugter 30 bis 150, noch bevorzugter 40 bis 130 und insbesondere 50 bis 120 auf.

Der Farbwert von geröstetem, gemahlenem Kaffee ist eine allgemein anerkannte Größe zur Quantifizierung des Röstgrads. Die Bestimmung des Farbwertes erfolgt erfindungsgemäß mit einem Farbmessgerät vom Typ Colorette 3b der Fa. Probat, Baujahr 2011. Das Messprinzip basiert auf einer Reflexionsmessung. Dabei wird die zu messende Kaffeeprobe mit Licht zweier Wellenlängen (Rotlicht und Infrarot) beleuchtet. Die Summe des reflektierten Lichtes wird elektronisch ausgewertet und als Farbwert angezeigt.

Der geröstete, gemahlene Kaffee weist einen Röstgrad auf, welcher über den Farbwert ausgedrückt (gemessen mit Colorette 3b der Fa. Probat; Baujahr 2011) in einem Bereich von bevorzugt 20 bis 170, bevorzugter 30 bis 120 oder 30 bis 100, noch bevorzugter 40 bis 100 oder 40 bis 80, am bevorzugtesten 45 bis 95 oder 45 bis 75 und insbesondere 50 bis 90 oder 50 bis 70 liegt.

In einer anderen bevorzugten Ausführungsform weist der geröstete, gemahlene Kaffee einen Röstgrad auf, welcher über den Farbwert ausgedrückt (gemessen mit Colorette 3b der Fa. Probat; Baujahr 2011) in einem Bereich von 20 bis 170, bevorzugter 50 bis 150, noch bevorzugter 60 bis 130, am bevorzugtesten 65 bis 135 und insbesondere 70 bis 120 liegt.

Die Farbwerte (gemessen mit Colorette 3b der Fa. Probat; Baujahr 2011) besonders bevorzugter Röstgrade A¹ bis A⁶ sind in untenstehender Tabelle aufgeführt:

| | A¹ | A² | A³ | A⁴ | A⁵ | A⁶ |
|---|---|---|---|---|---|---|
| Farbwert Colorette | 40-100 | 40-80 | 50-90 | 50-70 | 60-130 | 70-120 |

Die Getränkesubstanz ist im Wesentlichen pulverförmig ausgebildet und umfasst gerösteten, gemahlenen Kaffee, welcher im trockenen Zustand einen D[4,3]-Wert im Bereich von 100 bis 800 µm aufweist.

Beim D[4,3]-Wert handelt es sich um das mittlere Volumen D[4,3], welches eine dem Fachmann bekannte Messgröße ist und zur Beschreibung der mittleren Partikelgröße herangezogen werden kann.

Vorzugsweise macht die Getränkesubstanz den gesamten Inhalt der Portionskapsel aus. Sofern die Getränkesubstanz neben dem gerösteten, gemahlenen Kaffee weitere feste Bestandteile enthält, insbesondere weitere pulverförmige Bestandteile, bezieht sich erfindungsgemäß der D[4,3]-Wert auf die Gesamtheit aller Partikel. Dies gilt auch für Blends von geröstetem, gemahlenem Kaffee, deren Bestandteile für sich, d.h. im getrennten Zustand, unterschiedliche D[4,3]-Werte aufweisen; in diesem Fall bezieht sich erfindungsgemäß der D[4,3]-Wert ebenfalls auf die Gesamtheit aller Kaffeepartikel einschließlich ggf. enthaltener, weiterer pulverförmiger Bestandteile.

In einer bevorzugten Ausführungsform ist die Getränkesubstanz im Wesentlichen pulverförmig ausgebildet und umfasst gerösteten, gemahlenen Kaffee, welcher im trockenen Zustand einen D[4,3]-Wert im Bereich von 200 bis 650 µm aufweist.

In einer weiteren bevorzugten Ausführungsform ist die Getränkesubstanz im Wesentlichen pulverförmig ausgebildet und umfasst gerösteten, gemahlenen Kaffee, welcher im trockenen Zustand einen D[4,3]-Wert im Bereich von 300 bis 400 µm oder 350 bis 600 µm aufweist.

Durch Auswahl eines bestimmten Mahlgrads (ausgedrückt als D[4,3]-Wert) in Kombination mit dem textilen Flächengebilde und der Einwaagemenge lässt sich das jeweilige Getränk in der gewünschten sensorischen Qualität zubereiten. Methoden zur Bestimmung der Partikelgrößenverteilung sowie der mittleren Partikelgröße sind dem Fachmann bekannt. Der D[4,3]-Wert gibt das mittlere Volumen an, welches erfindungsgemäß bevorzugt durch Lasermessung bestimmt wird, beispielsweise mit Hilfe eines *Malvern Mastersizer* 3000 und der Dispergiereinheit *Malvern AeroS.* Dabei werden in einer Trockenmessung vorzugsweise ca. 7 g gemahlener Röstkaffee bei einem Dispergierdruck von 4 bar in die Messzelle überführt. Mit der Laserbeugung lässt sich die Partikelgrößenverteilung und der D[4,3]-Wert mittels der Erfassung des Streulichtes und der daraus resultierenden Beugungswinkel gemäß der Fraunhofer Theorie ermitteln.

Die Partikelgröße bzw. die Partikelgrößenverteilung des gemahlenen Kaffees beeinflusst den Brühdruck, die Entstehung einer Crema und den Geschmack des Kaffeegetränks.

In einer bevorzugten Ausführungsform weist der gemahlene Kaffee im trockenen Zustand einen D[4,3]-Wert im Bereich von 215 bis 365 µm auf, bevorzugter 240 bis 340 µm, am bevorzugtesten 265 bis 315 µm und insbesondere 290 µm. In einer anderen bevorzugten Ausführungsform weist der gemahlene Kaffee im trockenen Zustand einen D[4,3]-Wert im Bereich von 235 bis 385 µm auf, bevorzugter 260 bis 360 µm, am bevorzugtesten 285 bis 335 µm und insbesondere 310 µm. In einer weiteren bevorzugten Ausführungsform weist der gemahlene Kaffee im trockenen Zustand einen D[4,3]-Wert im Bereich von 255 bis 405 µm auf, bevorzugter 280 bis 380 µm, am bevorzugtesten 305 bis 355 µm und insbesondere 330 µm. In einer anderen bevorzugten Ausführungsform weist der gemahlene Kaffee im trockenen Zustand einen D[4,3]-Wert im Bereich von 275 bis 425 µm auf, bevorzugter 300 bis 400 um, am bevorzugtesten 325 bis 375 µm und insbesondere 350 µm. In einer weiteren bevorzugten Ausführungsform weist der gemahlene Kaffee im trockenen Zustand einen D[4,3]-Wert im Bereich von 325 bis 475 µm auf, bevorzugter 350 bis 450 µm, am bevorzugtesten 375 bis 425 µm und insbesondere 400 µm. In einer anderen bevorzugten Ausführungsform weist der gemahlene Kaffee im trockenen Zustand einen D[4,3]-Wert im Bereich von 375 bis 525 µm auf, bevorzugter 400 bis 500 µm, am bevorzugtesten 425 bis 475 µm und insbesondere 450 µm. In einer weiteren bevorzugten Ausführungsform weist der gemahlene Kaffee im trockenen Zustand einen D[4,3]-Wert im Bereich von 425 bis 575 µm auf, bevorzugter 450 bis 550 µm, am bevorzugtesten 475 bis 525 µm und insbesondere 500 µm. In einer anderen bevorzugten Ausführungsform weist der gemahlene Kaffee im trockenen Zustand einen D[4,3]-Wert im Bereich von 475 bis 625 µm auf, bevorzugter 500 bis 600 µm, am bevorzugtesten 525 bis 575 µm und insbesondere 550 µm. In einer weiteren bevorzugten Ausführungsform weist der gemahlene Kaffee im trockenen Zustand einen D[4,3]-Wert im Bereich von 550 bis 750 µm auf, bevorzugter 600 bis 700 µm, am bevorzugtesten 625 bis 675 µm und insbesondere 650 µm. In einer anderen bevorzugten Ausführungsform weist der gemahlene Kaffee im trockenen Zustand einen D[4,3]-Wert im Bereich von 650 bis 800 µm auf, bevorzugter 700 bis 800 µm, am bevorzugtesten 725 bis 775 µm und insbesondere 750 µm.

Besonders bevorzugte Ausführungsformen B¹ bis B⁸ sind in folgender Tabelle zusammengefasst:

| | B¹ | B² | B³ | B⁴ | B⁵ | B⁴ | B⁷ | B⁸ |
|---|---|---|---|---|---|---|---|---|
| D[4,3]-WERT [µm] | 290±25 | 310±25 | 330±25 | 350±25 | 400±25 | 450±25 | 500±25 | 550±25 |

Ganz besonders bevorzugt sind Ausführungsformen B⁴ bis B⁸.

Anhand des D[4,3]-Werts kann ein optimales Verhältnis zwischen Extraktionseffizienz und Extraktionsgeschwindigkeit einerseits und Filtrationsrate andererseits eingestellt werden.

In einer bevorzugten Ausführungsform weist die gesamte Menge an gemahlenem Kaffee im trockenen Zustand die gleiche Partikelgröße auf.

In einer besonders bevorzugten Ausführungsform weist der gemahlene Kaffee eine definierte Mischung verschiedener Partikelgrößen auf.

Die bevorzugten Partikelgrößenzusammensetzungen sind in folgender Tabelle zusammengefasst (Ausführungsformen C¹ bis C¹⁰):

| Partikelgröße in µm | C¹ | C² | C³ | C⁴ | C⁵ |
|---|---|---|---|---|---|
| <100 | 20-30 | 20-40 | 20-30 | 15-25 | 12-23 |
| >100 | 27-37 | 25-35 | 20-30 | 10-15 | 11-16 |
| >250 | 33-43 | 30-45 | 40-50 | 40-45 | 42-47 |
| >500 | 5-10 | 5-15 | 5-15 | 15-25 | 16-26 |
| D_{V} 50 µm | 250±25 | 290±25 | 310±25 | 350±25 | 400±25 |

| Partikelgröße in µm | C⁶ | C⁷ | C⁸ | C⁹ | C¹⁰ |
|---|---|---|---|---|---|
| <100 | 5-10 | 0-5 | 0-5 | 0-5 | 0-5 |
| >100 | 13-25 | 15-20 | 5-10 | 5-10 | 5-10 |
| >250 | 45-60 | 35-45 | 32-43 | 30-40 | 20-35 |
| >500 | 20-40 | 40-50 | 45-70 | 50-70 | 55-80 |
| D_{V} 50 µm | 450±25 | 500±25 | 550±25 | 600±25 | 650±25 |

Besonders bevorzugte Ausführungsformen sind C² bis C⁸.

Die Getränkesubstanz liegt in der Portionskapsel in einer Menge im Bereich von 1 bis 20 g vor.

Bevorzugt liegt die Getränkesubstanz in der Portionskapsel in einer Menge im Bereich von 2 bis 11 g vor, bevorzugter 3 bis 8 g oder 4 bis 11 g, noch bevorzugter 4 bis 7 g oder 5 bis 11 g, am bevorzugtesten 4.5 bis 6.5 g oder 6 bis 10 g, und insbesondere 5 bis 6 g oder 7 bis 10 g.

In einer bevorzugten Ausführungsform liegt die Getränkesubstanz in der Portionskapsel in einer Menge im Bereich von 4 bis 11 g vor.

In einer besonders bevorzugten Ausführungsform liegt die Getränkesubstanz in der Portionskapsel in einer Menge von 6±2 g vor, bevorzugter 6±1.5 g, noch bevorzugter 6±1 g, am bevorzugtesten 6±0.5 g, und insbesondere 6±0.3 g.

In einer anderen bevorzugten Ausführungsform liegt die Getränkesubstanz in der Portionskapsel in einer Menge von 7.7±4 g vor, bevorzugter 7.7±3 g, noch bevorzugter 7.7±2 g, am bevorzugtesten 7.7±1 g, und insbesondere 7.7±0.5 g.

In einer besonders bevorzugten Ausführungsform liegt die Getränkesubstanz in der Portionskapsel in einer Menge von 8±4 g vor, bevorzugter 8±3 g, noch bevorzugter 8±2 g, am bevorzugtesten 8±1 g, und insbesondere 8±0.5 g.

In einer weiteren besonders bevorzugten Ausführungsform liegt die Getränkesubstanz in der Portionskapsel in einer Menge von 9±4 g vor, bevorzugter 9±3 g, noch bevorzugter 9±2 g, am bevorzugtesten 9±1 g, und insbesondere 9±0.5 g.

Die Getränkesubstanz kann optional Zusätze wie Schokoladenpulver, Milchpulver, Teepulver, Süßungsmittel wie Zucker oder Zuckerausstauschstoffe, Gewürze, oder dergleichen enthalten.

In einer bevorzugten Ausführungsform enthält die Getränkesubstanz keine Zusätze und besteht ausschließlich aus geröstetem, gemahlenem Kaffee.

Die Portionskapsel zur Herstellung eines Kaffeegetränks weist einen Kapselgrundkörper auf, in welchem ein textiles Flächengebilde und eine Getränkesubstanz angeordnet sind, wobei die Getränkesubstanz zur Aufbewahrung in der Portionskapsel und zur Extraktion in der Portionskapsel durch das textile Flächengebilde hindurch mittels druckbeaufschlagtem Heißwasser vorgesehen ist.

Der Kapselgrundkörper ist bevorzugt ein tiefgezogener Kapselgrundkörper, welcher vorzugsweise kegelstumpfförmig oder zylindrisch geformt ist.

Der Kapselgrundkörper weist ferner einen Wandungsbereich auf, wobei der Wandungsbereich vorzugsweise eine Mehrzahl von Rillen aufweist und die Rillen zwischen der Membran, welche die offene Einfüllseite verschließt, und dem Bodenbereich über wenigstens einen Teil der Höhenerstreckung des Wandungsbereichs verlaufend vorgesehen sind. Diese Rillen bewirken, dass die Portionskapsel eine höhere mechanische Stabilität und ein verbessertes Verhalten beim Durchströmen der Portionskapsel mit der Extraktionsflüssigkeit in der Brühkammer aufweist, womit eine Verbesserung des Extraktionsprozesses herbeigeführt werden kann.

Vorzugsweise weist der Kapselgrundkörper im Bereich des Absatzes einen größeren Durchmesser auf als im Wandungsbereich zwischen dem Absatz und dem Bodenbereich. Hierdurch ergibt sich in vorteilhafter Weise eine besonders einfache und robuste Möglichkeit, eine Stapelbarkeit der Portionskapseln bzw. eine Stapelbarkeit des Kapselgrundkörpers der Portionskapseln herbeizuführen.

In einer weiteren bevorzugten Ausführungsform beträgt das Verhältnis des Durchmessers des an den Flansch/Randbereich angrenzenden Wandungsbereichs einerseits zum Durchmesser des Flansches andererseits zwischen 0,85 und 0,89 und bevorzugter 0,87. Ferner beträgt der Durchmesser des an den Flansch angrenzenden Wandungsbereichs bevorzugt 39 mm und/oder der Durchmesser des Flansches bevorzugt 45 mm.

In einer weiteren bevorzugten Ausführungsform weist der Kapselgrundkörper im Wandungsbereich zwischen dem Bodenbereich und dem Flansch eine geringere Wandstärke auf als im Bereich des Absatzes. Gemäß dieser Ausführungsform weist die Portionskapsel ferner bevorzugt Rillen im Wandungsbereich auf, wodurch eine verbesserte Stabilität erreicht wird. Hierdurch ist eine erhebliche Materialeinsparung möglich, wodurch Kosten und Energieaufwand zur Herstellung der Portionskapsel reduziert werden können.

Die Höhe des Kapselgrundkörpers vom Bodenbereich bis zum Flansch beträgt bevorzugt 20 bis 35 mm, bevorzugter 22 bis 32 mm, noch bevorzugter 25 bis 29 mm und am bevorzugtesten 27 mm.

Die Portionskapsel besteht beispielsweise aus Kunststoff, einem Naturstoff und/oder einem biologisch abbaubaren Werkstoff.

Bevorzugt enthält die Portionskapsel Polyethylen; vernetztes Polyethylen; Polypropylen; Mischpolymerisate aus Ethylen, Propylen, Butylen, Vinylestern und ungesättigten aliphatischen Säuren sowie deren Salzen und Estern; Vinylidenchlorid-Mischpolymerisate; Acetalharze; Acryl- und Methacrylsäureesterpolymerisate und deren Mischpolymerisate; Polyisobutylen; Isobutylen-Mischpolymerisate; Polyterephthalsäurediolester; Polyvinylether; Silicone; ungesättigte Polyesterharze; Polycarbonate und Mischungen von Polycarbonaten mit Polymerisaten bzw. Mischpolymerisaten; Polyamide; Polystyrol; Styrol-Misch- und Pfropfpolymerisate; Polyvinylchlorid; Polybuten; Polyurethane; Poly(4-methylpenten-1); vernetzte Polyharnstoffe; Acrylnitril-Misch- und Pfropfpolymerisate; Polyacrylate; Stärkekunststoffe wie thermoplastische Stärke; Polylactid-Copolymere oder thermoplastische Polyester aus Polyhydroxyfettsäuren.

Der Kapselgrundkörper kann farblos oder in einer beliebigen Farbe gefärbt sein. Ferner kann der Kapselgrundkörper durchsichtig, durchscheinend oder undurchsichtig sein.

Bevorzugt ist der Kapselgrundkörper gefärbt und undurchsichtig.

Die Außenseite des Kapselgrundkörpers kann bedruckt sein.

Der Kapselboden der Portionskapsel kann partiell offen oder geschlossen sein.

In einer bevorzugten Ausführungsform ist der Kapselboden der Portionskapsel geschlossen.

Gemäß dieser Ausführungsform wird der Kapselboden erst in der Brühkammer mittels eines von außen auf den Portionskapselboden wirkenden Perforationsmittels zur Erzeugung einer Auslauföffnung perforiert.

In einer besonders bevorzugten Ausführungsform ist der Kapselboden der Portionskapsel partiell offen.

Bei Portionskapseln mit partiell offenem Kapselboden ist die Öffnung zum Produktschutz mittels eines Siegels verschlossen, welches beispielsweise mittels des Perforationsmittels perforierbar oder von Hand vom Kapselboden abziehbar ist. Derartige Portionskapseln sind im Stand der Technik bekannt.

Gemäß dieser Ausführungsform ist die Öffnung im Kapselboden bevorzugt zentriert angeordnet und weist bevorzugt eine kreisförmige Struktur auf.

Das relative Verhältnis zwischen dem Flächeninhalt der Öffnung im Kapselboden und dem Flächeninhalt des gesamten Kapselbodens liegt bevorzugt im Bereich von 0,08 bis 0,13; bevorzugter 0,09 bis 0,12; noch bevorzugter 0,09 bis 0,11 und beträgt am bevorzugtesten 0,10.

Die Portionskapsel ist bevorzugt hermetisch dicht, d.h. die in der Portionskapsel befindliche Getränkesubstanz ist vor dem Extraktionsvorgang im Wesentlichen aromadicht gegenüber der Umwelt verschlossen.

Die offene Einfüllseite des Kapselgrundköpers ist durch eine Membran oder Deckelfolie verschlossen.

Die Membran oder Deckelfolie kann aus demselben Werkstoff wie, oder einem anderen Werkstoff als der Kapselgrundkörper gefertigt sein und wird vorzugsweise durch Siegeln und/oder Kleben am Kapselgrundkörper befestigt.

Bevorzugt umfasst die Membran eine oder mehrere Lagen unterschiedlicher Kunststoffe mit den zum Produktschutz notwendigen Barrieren; u.a. ggf. Aluminiumfolie. Die hierfür notwendigen Zusammensetzungen sind dem Fachmann bekannt.

Bevorzugt ist die Außenseite der Membran, d.h. die dem Füllgut abgewandte Seite, teilweise oder vollständig bedruckt.

Im Kapselgrundkörper der Portionskapsel ist ein textiles Flächengebilde angeordnet, welches als Filter dient. Textile Flächengebilde im Sinne der Erfindung umfassen flächige, d.h. zweidimensional erstreckte Gebilde, welche Fasern umfassen. Die Fasern können ihrerseits jegliche Art von Textilien bilden, insbesondere Gewebe, Vliese, Filze, Schwämme, etc.

In Portionskapseln zur Getränkeherstellung können unterschiedliche textile Flächengebilde als Filter verwendet werden. Unterschiedliche Ausführungsformen umfassen flache und flexible bis starre und dreidimensionale textile Flächengebilde. Besonders bevorzugt sind erfindungsgemäß porös-kaskadenartige textile Flächengebilde. Mit porös-kaskadenartigen textilen Flächengebilden wird ein ausreichend hoher Brühdruck im Extraktionsvolumen erreicht, der ein sensorisch einwandfreies Getränk ergibt. Gleichzeitig wird die Getränkesubstanz im gewünschten Maße im Extraktionsraum zurückgehalten und die Schaumbildung zur Erlangung der Crema auf dem Getränk kann unterbunden werden.

Porös-kaskadenartige textile Flächengebilde weisen eine deutliche dreidimensionale Struktur auf, welche porenähnliche Hohlräume enthält, wobei die durchfließende, zu filtrierende Flüssigkeit wie bei einer Kaskade von Porenebene zu Porenebene fließt. Eventuell vorhandener Schaum wird gebrochen und bildet keine Crema.

Flächig-durchlässige textile Flächengebilde haben eine flache, papierdünne Gestalt. Durch chaotisch geordnete Fasern mit wenig übereinander angeordneten Lagen ergibt sich ein textiles Flächengebilde mit geringer Maschenweite. Das anliegende Filtergut erzeugt ausreichend Druck, um cremabildende Stoffe zu extrahieren.

Die Verwendung eines textilen Flächengebildes als Filter hat den Vorteil, dass ein aufwändiger Kunststoffspritzvorgang oder ein Tiefzieh- bzw. Prägeverfahren zur Herstellung von Kunststoffsieben eingespart werden kann. Die Herstellungskosten werden somit erheblich gesenkt. Zudem wird keine Stützstruktur benötigt, da sich das textile Flächengebilde unmittelbar am Kapselboden abstützt. Im Vergleich zu den aus dem Stand der Technik bekannten Kunststofffiltern hat das textile Flächengebilde zudem den Vorteil, dass es eine deutlich größere Flüssigkeitseintrittsoberfläche aufweist. Ferner wird ein Flüssigkeitsquerfluss (parallel zur Haupterstreckungsebene der Filterebene) ermöglicht, wodurch ein besseres Durchmisch- und Abfließverhalten erzielt wird. Darüber hinaus hat sich gezeigt, dass sich bei der Verwendung eines textilen Flächengebildes die Gefahr von Siebverstopfungen deutlich reduziert bzw. nahezu ausgeräumt ist. Das textile Flächengebilde ist sowohl bei einer Getränkezubereitung mit einer unter vergleichsweise niedrigem Druck stehenden Zubereitungsflüssigkeit, als auch bei einer Getränkezubereitung mit einer unter vergleichsweise hohem Druck stehenden Zubereitungsflüssigkeit verstopfungsresistent. Ferner wird zuverlässig stets ein Flüssigkeitsquerfluss im textilen Flächengebilde aufrechterhalten und ein Abfluss der in das textile Flächengebilde eintretenden Flüssigkeiten zu einer Abflussöffnung gewährleistet.

Das textile Flächengebilde ist vorzugsweise reißfest ausgebildet.

Das textile Flächengebilde umfasst bevorzugt ein Vlies, Filz und andere Textilien bzw. Strukturen mit Poren und Kanälen wie offenporige Schwämme, offenporigen Schaumstoff oder eine Kombination daraus.

In einer bevorzugten Ausführungsform der vorliegenden Erfindung ist das textile Flächengebilde ein Vlies, welches einen aus Kunststoff-Feinfasern wie beispielsweise Polyester-Feinfasern hergestellten Vliesstoff umfasst, welcher insbesondere ein Wirrfaser- und/oder faserorientierter-Vliesstoff ist. Das Vlies ist bevorzugt flächig-durchlässig.

In einer besonders bevorzugten Ausführungsform der vorliegenden Erfindung weist das textile Flächengebilde eine Filzstruktur auf. Das textile Flächengebilde kann eine oder mehrere, übereinander angeordnete Filzstrukturen aufweisen. Der Filz ist bevorzugt porös-kaskadenartig und kann beispielsweise Viskose, Polyester, Polyamid, Polypropylen oder Kombinationen daraus umfassen. Es können auch mehrere Vliese und/oder Filze hintereinander kombiniert werden. Besonders bevorzugt weist der Filz eine Nadelfilzstruktur auf. Gemäß dieser Ausführungsform besteht das textile Flächengebilde bevorzugt aus mindestens einer Filzstruktur und einer Trägerstruktur, insbesondere einer Gewebestruktur, wobei die Filzstruktur besonders bevorzugt zumindest in einen Teilabschnitt des Volumens die Trägerstruktur umfasst. Vorzugsweise weist das textile Flächengebilde zwei Filzstrukturen auf, die durch die Trägerstruktur voneinander getrennt sind. Vorzugsweise werden die beiden Filzstrukturen in der Portionskapsel übereinander angeordnet und miteinander verbunden. Die Dicke der beiden Filzstrukturen kann gleich oder unterschiedlich sein. Vorzugsweise ist eine der Getränkesubstanz zugewandte Filzstruktur dünner als die dem Kapselboden zugewandte Filzstruktur oder umgekehrt. Vorzugsweise wird die Oberfläche der Filzstruktur behandelt, beispielsweise wärmebehandelt, um beispielsweise lose Fasern zu fixieren.

Ein textiles Flächengebilde, welches eine Trägerstruktur, insbesondere eine Gewebestruktur, und eine Filzstruktur aufweist, kann beispielsweise dadurch hergestellt werden, dass eine Gewebestruktur bestehend aus Längs- und Querfäden zur Verfügung gestellt wird. Für die Konstruktion eines Filzes, insbesondere eines Nadelfilzes, werden vorzugsweise Fasereinheiten ausgewählt von 0,8 bis 7 dtex. Die Verbindung der Einzelfasern miteinander zu einem Filz und/oder dessen Verankerung in der Trägerstruktur findet vorzugsweise durch den Produktionsprozess des Vernadelns statt. Dabei werden Nadeln mit umgekehrten Widerhaken in das vorgelegte Faserpaket mit hoher Geschwindigkeit eingestochen und wieder herausgezogen. Durch die Widerhaken werden die Fasern über eine Vielzahl entstehender Schlaufen miteinander und/oder mit dem Trägergewebe verschlungen.

Wenn das textile Flächengebilde sowohl einen Filz als auch ein Vlies umfasst, sind diese vorzugsweise miteinander verbunden. Der Fliz und/oder das Vlies können mehrlagig verwendet werden, wobei sich die Lagen in der Art des verwendeten Ausgangsmaterials und/oder dessen Verarbeitung unterscheiden können.

In einer weiteren bevorzugten Ausführungsform der vorliegenden Erfindung ist das textile Flächengebilde ein Filtergewebe, z.B. ein offenporiger Schwamm und/oder ein offenporiger Schaumstoff, welcher im Bereich des Kapselbodens angeordnet ist. Der Schwamm umfasst beispielsweise einen retikulierten Polyurethanschaum.

In einer bevorzugten Ausführungsform ist das textile Flächengebilde flächig-durchlässig, bevorzugter ein flächig-durchlässiges Vlies.

Wenn das textile Flächengebilde ein flächig-durchlässiges Vlies ist, so ist der Kapselboden der Portionskapsel bevorzugt geschlossen.

In einer besonders bevorzugten Ausführungsform ist das textile Flächengebilde porös-kaskadenartig, bevorzugter ein porös-kaskadenartiger Filz.

Wenn das textile Flächengebilde ein porös-kaskadenartiger Filz ist, so ist der Kapselboden der Portionskapsel bevorzugt partiell offen.

Textile Flächengebilde besitzen eine gewisse Dehnbarkeit in Längs-und Querrichtung. Je nach Materialstärke und Zusammensetzung bzw. Aufbau des Materials wird die Dehnbarkeit z.B. gemäß der ISO 9073 oder z.B. gemäß der ISO 13934 bestimmt. Erfindungsgemäß wird die Dehnbarkeit der textilen Flächengebilde bevorzugt gemäß der ISO 9073 oder gemäß der ISO 13934 bestimmt.

Wenn das textile Flächengebilde ein Vlies ist und die Materialstärke kleiner als ein Millimeter ist, beträgt die Höchstzugkraft in Längsrichtung bevorzugt 50 N bis 150 N pro 5 cm und in Querrichtung bevorzugt 30 N bis 90 N pro 5 cm, wobei die Höchstzugkraft-Dehnung in Längs- und in Querrichtung bevorzugt 20% bis 40% umfasst.

Beträgt die Materialstärke mehr als ein Millimeter, so beträgt die Höchstzugkraft in Längs-und in Querrichtung bevorzugt 40 daN bis 120 daN, wobei die Höchstzugkraft-Dehnung in Längs- und in Querrichtung 20% bis 40% beträgt.

Das textile Flächengebilde weist eine Mehrzahl von Filteröffnungen auf, wobei die Filteröffnungen bevorzugt einen mittleren Durchmesser im Bereich von 100 bis 1000 µm, bevorzugter 200 bis 700 µm, am bevorzugten 250 bis 550 µm und insbesondere 300 bis 500 µm. Methoden zur Bestimmung des mittleren Durchmessers der Filteröffnungen sind dem Fachmann bekannt.

In einer bevorzugten Ausführungsform weist das textile Flächengebilde eine Mehrzahl von Filteröffnungen auf, welche derart ausgebildet sind, dass die Summe der Querschnitte der Filteröffnungen zwischen 0,1 und 10 %, bevorzugter zwischen 1 und 3 % und am bevorzugtesten 1,4 % des gesamten Querschnitts des textilen Flächengebildes umfasst.

Der mittlere Durchmesser der Filteröffnungen und der D[4,3]-Wert sind so aufeinander abgestimmt, dass keine Partikel der Getränkesubstanz in das Kaffeegetränk gelangen und gleichzeitig eine möglichst schnelle und effiziente Extraktion der Getränkesubstanz erzielt wird.

Die Luftdurchlässigkeit von textilen Flächengebilden wird gemäß der DIN ISO 9237 bestimmt. Hierzu wird eine definierte Fläche des Probenmaterials eingespannt. Die Probe wird senkrecht zur Oberfläche von Luft durchströmt. Die Messung kann als Unter- oder Differenzdruckbestimmung erfolgen. Die Luftdurchlässigkeit wird bevorzugt bei einem Druck von 100 Pascal bestimmt.

Das textile Flächengebilde kann eine Luftdurchlässigkeit im Bereich von 50 bis 4000 l/(m²s) aufweisen.

Besonders bevorzugte Luftdurchlässigkeiten des textilen Flächengebildes sind in der untenstehenden Tabelle als Ausführungsformen D¹ bis D⁴³ zusammengefasst:

| | D¹ | D² | D³ | D⁴ | D⁵ | D⁶ | D⁷ | D⁸ | D⁹ | D¹⁰ |
|---|---|---|---|---|---|---|---|---|---|---|
| Luftdurchlässigkeit [l/(m²s)] | 50-150 | 150-200 | 150-170 | 160-180 | 180-200 | 180-240 | 230-330 | 250-310 | 270-290 | 330-380 |

| | D¹¹ | D¹² | D¹³ | D¹⁴ | D¹⁵ | D¹⁶ | D¹⁷ | D¹⁸ | D¹⁹ | D²⁰ |
|---|---|---|---|---|---|---|---|---|---|---|
| Luftdurchlässigkeit [l/(m²s)] | 350-450 | 370-430 | 390-410 | 400-500 | 480-580 | 550-650 | 630-800 | 780-900 | 880-1000 | 1000-1200 |

| | D²¹ | D²² | D²³ | D²⁴ | D²⁵ | D²⁶ | D²⁷ | D²⁸ | D²⁹ | D³⁰ |
|---|---|---|---|---|---|---|---|---|---|---|
| Luftdurchlässigkeit [l/(m²s)] | 1200-1400 | 1400-1600 | 1600-1800 | 1800-2200 | 1900-2100 | 1980-2020 | 2200-2500 | 2500-3000 | 3000-3500 | 3500-4000 |

| | D³¹ | D³¹ | D³³ | D³⁴ | D³⁵ | D³⁶ | D³⁷ |
|---|---|---|---|---|---|---|---|
| Luftdurchlässigkeit (l/(m²s)] | 160±10 | 170±10 | 193±10 | 281±10 | 400±10 | 600±100 | 800±100 |

| | D³⁸ | D³⁹ | D⁴⁰ | D⁴¹ | D⁴² | D⁴⁵ |
|---|---|---|---|---|---|---|
| Luftdurchlässigkeit [l/(m²s)] | 1000±100 | 1500±100 | 1700±100 | 2000±50 | 2100±50 | 2500±100 |

In einer bevorzugten Ausführungsform weist das textile Flächengebilde eine Luftdurchlässigkeit von mindestens 50 l/(m²s) auf.

In einer anderen bevorzugten Ausführungsform weist das textile Flächengebilde eine Luftdurchlässigkeit von mindestens 100 l/(m²s) auf.

Besonders bevorzugt weist das textile Flächengebilde eine Luftdurchlässigkeit von über 160 l/(m²s) auf.

Wenn das textile Flächengebilde Vlies umfasst oder aus Vlies besteht, sind die Ausführungsformen D²⁴ bis D²⁶ bevorzugt, und D⁴¹ besonders bevorzugt.

In einer bevorzugten Ausführungsform weist das textile Flächengebilde eine Luftdurchlässigkeit im Bereich von 160 bis 500 l/(m²s) auf.

Wenn das textile Flächengebilde Filz umfasst oder aus Filz besteht, sind die Ausführungsformen D² bis D⁵, D⁷ bis D⁹ und D¹¹ bis D¹³ bevorzugt, und D³² und D³⁵ besonders bevorzugt.

Wenn der D [4,3]-Wert im Bereich von 380 bis 580 µm, bevorzugt 400 bis 550 µm liegt, ist die Ausführungsform D³² ganz besonders bevorzugt.

Wenn der D [4,3]-Wert im Bereich von 300 bis 400 µm, bevorzugt 320 bis 380 µm liegt, ist die Ausführungsform D³⁵ ganz besonders bevorzugt.

Alternative Bezeichnungen für Flächengewicht sind Massenbelegung oder Grammatur.

Methoden zur Bestimmung des Flächengewichts eines textilen Flächengebildes sind einem Fachmann bekannt. Das Flächengewicht wird vorzugsweise bestimmt gemäß der DIN EN 12127.

Getestete Ausführungsformen E¹ bis E²⁴ sind in der nachfolgenden Tabelle zusammengefasst:

| | E¹ | E² | E³ | E⁴ | E⁵ | E⁶ | E⁷ | E⁸ | E⁹ | E¹⁰ |
|---|---|---|---|---|---|---|---|---|---|---|
| Flächengewicht [g/m²] | 10-150 | 30-120 | 50-100 | 60-80 | 150-300 | 300-1100 | 500-950 | 550-850 | 600-800 | 600-700 |

| | E¹¹ | E¹² | E¹³ | E¹⁴ | E¹⁵ | E¹⁶ | E¹⁷ |
|---|---|---|---|---|---|---|---|
| Flächengewicht [g/m²] | 900-1400 | 950-1350 | 1000-1300 | 1050-1250 | 1100-1200 | 1200-1400 | 1250-1350 |

| | E¹⁸ | E¹⁹ | E²⁰ | E²¹ | E²² | E²³ | E²⁴ |
|---|---|---|---|---|---|---|---|
| Flächengewicht [g/m²] | 70±10 | 650±10 | 760±10 | 900±10 | 1000 ±10 | 1150 ±10 | 1300±10 (2·650±10) |

Erfindungsgemäß weist das textile Flächengebilde ein Flächengewicht von 900 g/m² bis 1400 g/m² auf.

In einer weiteren besonders bevorzugten Ausführungsform weist das textile Flächengebilde ein Flächengewicht von 1150±10 g/m² aauf, bevorzugter 1150±8 g/m², noch bevorzugter 1150±6 g/m², am bevorzugtesten 1150±4 g/m² und insbesondere 1150±2 g/m². Gemäß dieser Auführungsform umfasst das textile Flächengebilde Filz oder besteht aus Filz.

Wenn das textile Flächengebilde Filz umfasst oder aus Filz besteht, sind die Ausführungsformen E¹¹, E¹⁵ und E¹⁷ bevorzugt, und E²³ besonders bevorzugt.

Wenn der D [4,3]-Wert im Bereich von 380 bis 580 µm, bevorzugt 400 bis 550 µm liegt, ist die Ausführungsform E²³ ganz besonders bevorzugt.

Bevorzugte Merkmalskombinationen sind D²E¹¹, D⁴E¹⁴ und D³²E²³.

In einer besonders bevorzugten Ausführungsform weist das textile Flächengebilde eine Luftdurchlässigkeit von über 160 l/(m²s) und ein Flächengewicht von über 900 g/m² auf.

In einer weiteren besonders bevorzugten Ausführungsform weist das textile Flächengebilde eine Luftdurchlässigkeit von über 160 l/(m²s) und ein Flächengewicht von über 900 g/m² auf, wobei der Kapselboden partiell offen ist.

Bevorzugt beträgt der Quotient aus dem Flächengewicht in g/m² und der Luftdurchlässigkeit in l/(m²s) des textilen Flächengebildes mindestens 1 (gs)/l.

In einer bevorzugten Ausführungsform beträgt der Quotient aus dem Flächengewicht in g/m² und der Luftdurchlässigkeit in l/(m²s) des textilen Flächengebildes mindestens 1 (gs)/l, bevorzugter mindestens 2 (gs)/l, noch bevorzugter mindestens 3 (gs)/l oder 4 (gs)/l, am bevorzugtesten mindestens 5(gs)/l und insbesondere mindestens 6 (gs)/l.

In einer besonders bevorzugten Ausführungsform beträgt der Quotient aus dem Flächengewicht in g/m² und der Luftdurchlässigkeit in l/(m²s) des textilen Flächengebildes 6,76±0,2 (gs)/l.

In einer anderen besonders bevorzugten Ausführungsform beträgt der Quotient aus dem Flächengewicht in g/m² und der Luftdurchlässigkeit in l/(m²s) des textilen Flächengebildes 1,63±0,2 (gs)/l.

Das textile Flächengebilde weist bevorzugt eine Dicke im Bereich von 0,20 und 5 mm auf.

Wenn das textile Flächengebilde Vlies umfasst oder aus Vlies besteht, liegt seine Dicke bevorzugt im Bereich von 0,20 bis 0,8 mm, bevorzugter 0,25 bis 0,39 mm und beträgt am bevorzugtesten 0,32 mm.

Wenn das textile Flächengebilde Filz umfasst oder aus Filz besteht, liegt seine Dicke bevorzugt im Bereich von 0,20 bis 5 mm, bevorzugter 1,5 bis 3,5 mm und beträgt am bevorzugtesten 3,2 mm.

In einer besonders bevorzugten Ausführungsform, wenn das textile Flächengebilde Filz umfasst oder aus Filz besteht, liegt seine Dicke im Bereich von 2 bis 6 mm, bevorzugter 3 bis 5 mm und am bevorzugtesten 3,8 bis 4,2 mm. Gemäß dieser Ausführungsform weist das textile Flächengebilde vorzugsweise ein Flächengewicht von 1150±10 g/m² auf.

Der Durchmesser des textilen Flächengebildes kann dem innenseitigen Durchmesser des Kapselbodens entsprechen, oder aber größer oder kleiner sein.

Wenn der Durchmesser des textilen Flächengebildes größer als der innenseitige Durchmesser des Kapselbodens ist, wird beim Befüllen der Portionskapsel mit Getränkesubstanz das textile Flächengebilde an den Bodenbereich angedrückt, wobei der überstehende Randbereich sich zwangsläufig an einen Seitenwandbereich der Portionskapsel anschmiegt und in Richtung der Einfüllseite absteht bzw. in Richtung der Einfüllseite abgeknickt wird. Dies hat den Vorteil, dass, wenn ein Zentralbereich des textilen Flächengebildes infolge eines mechanischen Kontaktes mit dem von außen in den Bodenbereich eintretenden Perforationsmittel vom Boden abgehoben wird, der Randbereich in Richtung des Kapselbodens und in Richtung des Zentralbereichs nachrutscht, so dass keine Getränkesubstanz ungefiltert am Rand des textilen Flächengebildes vorbei in Richtung Ausgangsöffnung fließt. Dies ermöglicht insbesondere ein Anheben des textilen Flächengebildes vom Kapselboden auch bei einem nicht-elastischen textilen Flächengebilde, ohne dass die Filterwirkung beeinträchtigt wird. Bei einem elastischen textilen Flächengebilde wird das Anheben des Zentralbereichs ohne Beeinträchtigung der Filterwirkung durch den nachrutschenden Randbereich des textilen Flächengebildes zumindest begünstigt, da auch eine Kombination aus Dehnen und Nachrutschen im Falle der Perforation des Kapselbodens denkbar ist.

In einer bevorzugten Ausführungsform ist der Durchmesser des textilen Flächengebildes 1 bis 15 % größer als der innenseitige Durchmesser des Kapselbodens.

Das textile Flächengebilde kann am Kapselboden befestigt sein oder lediglich auf dem Kapselboden aufliegen.

In einer bevorzugten Ausführungsform wird das textile Flächengebilde einfach in den Kapselgrundkörper eingelegt und so auf dem Boden der Portionskapsel angeordnet, dass es möglichst großflächig anliegt. Anschließend kann die Getränkesubstanz in den Kapselgrundkörper eingefüllt werden. Vorzugsweise erfolgt dabei eine Fixierung des textilen Flächengebildes am Kapselboden durch die aufliegende Getränkesubstanz.

In einer anderen bevorzugten Ausführungsform wird das textile Flächengebilde mit dem Kapselboden verbunden, beispielsweise durch Kleben oder Siegeln. Siegeln erfolgt bevorzugt mittels Ultraschall.

Besonders bevorzugt wird das eine Filzstruktur aufweisende textile Flächengebilde an den Kapselboden gesiegelt, insbesondere durch Ultraschall.

Weist das textile Flächengebilde eine oder mehrere Filzstrukturen und eine Trägerstruktur auf, werden die Strukturen in der Portionskapsel übereinander angeordnet und ggf. miteinander verbunden.

Wenn das textile Flächengebilde Vlies umfasst oder aus Vlies besteht, wird das Vlies besonders bevorzugt an den Kapselboden gesiegelt, insbesondere durch Ultraschall. Weiterhin bevorzugt wird das Vlies vor dessen Befestigung an der Kapsel, insbesondere dem Kapselboden, gespannt, um die Anlage an den Boden zu verbessern.

Das Gewicht des leeren Kapselgrundkörpers inklusive des textilen Flächengebildes beträgt 1,00 bis 2,50 g.

Bevorzugt liegt das Gewicht des leeren Kapselgrundkörpers inklusive des textilen Flächengebildes im Bereich von 1,00 bis 1,80 g, bevorzugter 1,10 bis 1,70 g, noch bevorzugter 1,20 bis 1,60 g, am bevorzugtesten 1,30 bis 1,50 und insbesondere 1,35 bis 1,41 g.

In einer anderen, besonders bevorzugten Ausführungsform liegt das Gewicht des leeren Kapselgrundkörpers inklusive des textilen Flächengebildes im Bereich von 1,70 bis 2,50 g, bevorzugter 1,80 bis 2,40 g, noch bevorzugter 1,90 bis 2,30 g, am bevorzugtesten 2,00 bis 2,20 und insbesondere 2,08 bis 2,14 g.

Zum Schutz der Getränkesubstanz vor Feuchtigkeit und Sauerstoff und zur Erhöhung der Lagerstabilität der Portionskapseln, werden die Portionskapseln bevorzugt mit Inertgas beaufschlagt, so dass im Inneren der Kapseln ein leichter Überdruck entsteht.

Das Inertgas ist vorzugsweise Stickstoff.

Die Portionskapsel kann mit einer Kennung versehen werden. So kann beispielsweise eine mechanische Kennung bzw. eine mechanische Passung der Portionskapsel mit einem Passungselement der Vorrichtung zur Herstellung des Kaffeegetränks über die bereits oben beschriebenen Rillen im Wandungsbereich des Kapselgrundkörpers realisiert werden. Darüber hinaus können auch Kennungen basierend auf elektrischer Leitfähigkeit oder Magnetismus eingesetzt werden.

Der Brühdruck wird unter standardisierten Bedingungen durch den D[4,3]-Wert des gemahlenen Kaffees, sowie durch die Menge der in der Portionskapsel enthaltenen Getränkesubstanz beeinflusst.

Der Brühdruck liegt bevorzugt im Bereich von 1 bis 18 bar.

Der Brühdruck bezeichnet vorzugsweise den gemessenen Druck, den die Pumpe aufbringen muss um Wasser in und durch die Portionskapsel zu pumpen, welche sich in der Brühkammer befindet.

Bevorzugte Ausführungsformen F¹ bis F¹⁰ sind in folgender Tabelle zusammengefasst:

| | F¹ | F² | F³ | F⁴ | F⁵ | F⁶ | F⁷ | F⁸ | F⁹ | F¹⁰ |
|---|---|---|---|---|---|---|---|---|---|---|
| Brühdruck [bar] | 2-5 | 3-6 | 4-6 | 4-8 | 6-8 | 6,5-10 | 8-10 | 9-12 | 11-13 | 13-15 |

Besonders bevorzugt sind die Ausführungsformen F² bis F⁹.

Mit der erfindungsgemäßen Portionskapsel können verschiedene Kaffegetränke hergestellt werden.

Bevorzugte Kaffeegetränke sind Espresso und Filterkaffee, bevorzugter Filterkaffee.

Bevorzugt bezeichnet der Begriff "Filterkaffee" ein Kaffeegetränk mit einem Volumen von mehr als 80 ml, welches keine Crema aufweist und einem Kaffeegetränk entspricht, das mit Geräten druckloser Filtration zubereitet werden kann.

Das erzielbare Getränkevolumen kann im Bereich von 20 bis 400 ml liegen.

Handelt es sich bei dem Kaffegetränk um Espresso, so liegt das erzielbare Getränkevolumen bevorzugt zwischen 30 und 50 ml.

Das erzielbare Getränkevolumen liegt bevorzugt im Bereich von 80 bis 350 ml.

Handelt es sich bei dem Kaffegetränk um Filterkaffee, so liegt das erzielbare Getränkevolumen vorzugsweise zwischen 80 und 180 ml oder 150 und 330 ml.

In einer besonders bevorzugten Ausführungsform liegt das erzielbare Getränkevolumen zwischen 80 und 180 ml und insbesondere zwischen 100 und 150 ml.

In einer weiteren besonders bevorzugten Ausführungsform liegt das erzielbare Getränkevolumen zwischen 150 und 330 ml und insbesondere zwischen 180 und 300 ml.

Das herzustellende Kaffegetränk kann eine Crema aufweisen.

In einer bevorzugten Ausführungsform weist das Kaffeegetränk eine Crema auf. Gemäß dieser Ausführungsform liegt das erzielbare Getränkevolumen bevorzugt zwischen 30 und 50 ml.

In einer besonders bevorzugten Ausführungsform weist das Kaffeegetränk keine Crema auf. Gemäß dieser Ausführungsform liegt das erzielbare Getränkevolumen bevorzugt zwischen 80 und 350 ml, bevorzugter zwischen 80 und 180 ml oder zwischen 150 und 330 ml, am bevorzugtesten zwischen 100 und 150 ml oder zwischen 180 und 300 ml.

Bevorzugte Kombinationen besonders bevorzugter Ausführungsformen sind der folgenden Tabelle zu entnehmen:

| D[4,3]-Wert | Menge Kaffee [g] | textiles Flächengebilde | | Brühdruck | erzielbares Volumen [ml] |
|---|---|---|---|---|---|
| | | Flächengewicht | Luftdurchlässigkeit | | |
| 350-600 µm | 9±0,5 | E¹⁴ | D² | F⁴ | 150-330 |
| B⁵-B⁷ | 9±0,5 | E²³ | D³² | F⁵ | 180-300 |
| B⁸ | 9±0,5 | E²³ | D³² | F³ | 180-300 |

### Ausführungsbeispiele

Die Bestimmung des Röstgrades erfolgte mit dem Farbmessgerät Colorette 3b der Fa. Probat; Baujahr 2011. Das Messprinzip basiert auf einer Reflexionsmessung. Dabei wird die zu messende Kaffeeprobe mit Licht zweier Wellenlängen (Rotlicht und Infrarot) beleuchtet. Die Summe des reflektierten Lichtes wird elektronisch ausgewertet und als Farbwert angezeigt. Sehr dunkel gerösteter Rohkaffee ergibt Messwerte zwischen 50 bis 70. Über 70 liegende Werte haben mittelstark bis hell geröstete Kaffeebohnen.

Die Partikelgrößenverteilung und der D[4,3]-Wert wurden in einer Trockenmessung mit dem Messinstrument Malvern Mastersizer 3000 und der Dispergiereinheit Malvern AeroS bestimmt. Dazu wurden ca. 7 g gemahlener Röstkaffee bei einem Dispergierdruck von 4 bar in die Messzelle überführt. Mit der Laserbeugung lässt sich die Partikelgrößenverteilung und der D[4,3]-Wert mittels der Erfassung des Streulichtes und der daraus resultierenden Beugungswinkel gemäß der Fraunhofer Theorie ermitteln.

Die Luftdurchlässigkeit der textilen Flächengebilde wurde gemäß der DIN ISO 9237 bestimmt. Hierzu wurde eine definierte Fläche des Probenmaterials eingespannt. Die Probe wurde senkrecht zur Oberfläche von Luft durchströmt. Die Messung kann als Unter- oder Differenzdruckbestimmung erfolgen. Die Luftdurchlässigkeit wurde bei einem Druck von 100 Pascal bestimmt.

Das Flächengewicht der textilen Flächengebilde wurde bestimmt gemäß der DIN EN 12127.

Der Brühdruck bezeichnet den gemessenen Druck, den die Pumpe aufbringen muss um Wasser in und durch die Portionskapsel zu pumpen, welche sich in der Brühkammer befindet.

Als Beurteilungskriterium diente die sensorische Beurteilung des Getränkes sowohl optisch, bezogen auf die Cremafreiheit als auch geschmacklich. Bei offenem Kapselboden entsteht wenig oder gar keine Crema. Als cremafrei wurden Proben bezeichnet, bei denen die geringe Menge Schaum bzw. Bläschen innerhalb von 10 Sekunden verschwunden war. Bei der geschmacklichen Prüfung muss auf einer Punkteskala von 0 bis 6 ein Wert zwischen 5,0 und 6,0 erreicht werden (0 = missfällt, 3 = weder gefällt noch missfällt, 6 = gefällt außerordentlich).

Im Wesentlichen wurden die Kriterien, Röstigkeit, Bitterkeit, Säure, Süße und ggf. Körper herangezogen. Die Prüfung erfolgte durch sensorisch geschulte Verkoster.

### Ausführunasbeispiel 1

Es wurden verschiedene Kaffeegetränke unter Verwendung von flächig-durchlässigen und porös-kaskadenartigen textilen Flächengebilden bei einem D[4,3]-Wert des Kaffees von 350 µm hergestellt (Tabelle 1).

Die Testreihen **1** und **2** der Tabelle 1 belegen, dass es möglich ist, mit Farbwerten zwischen 70 und 120 und einem feinen Mahlgrad (ausgedrückt über den D[4,3]-Wert) in Kombination mit dem jeweiligen textilen Flächengebilde sensorisch einwandfreie Getränke mit 30 ml bis 150 ml Getränkevolumen erzielen zu können; und dies sowohl mit Crema (Testreihe 1 (Vergleichsbeispiel)) als auch cremafrei (Testreihe **2**). Mit niedrigeren Farbwerten sind hingegen keine guten sensorischen Ergebnisse erreichbar (Testreihe 3).

### Ausführunasbeispiel 2

Es wurden verschiedene Kaffeegetränke unter Verwendung von unterschiedlichen porös-kaskadenartigen textilen Flächengebilden hergestellt (Tabelle 2).

In Testreihen **4** bis **9** sind vergleichende Untersuchungen aufgezeigt um cremafreie Getränke mit hohem Getränkevolumen zu erzielen. Hierbei wurden porös-kaskadenartige textile Flächengebilde mit veränderlichen Flächengewichten und unterschiedlichen Luftdurchlässigkeiten verwendet. Interessanterweise ergeben hohe Flächengewichte zwar eine absolute Cremafreiheit, obwohl der Brühdruck ansteigt - Testreihe **8** - doch erst nach der Veränderung der Luftdurchlässigkeit des textilen Flächengebildes - Testreihe **9** - entsteht ein sensorisch hervorragendes Getränk. Änderungen des Röstgrades (Farbwerte 90 bis 120) ergeben keine guten Getränke.

### Ausführungsbeispiel 3

Es wurden verschiedene Kaffeegetränke unter Verwendung eines porös-kaskadenartigen textilen Flächengebildes bei unterschiedlichen D[4,3]-Werten des Kaffees hergestellt (Tabelle 3).

Aus den Testreihen **10** bis **12** und **9** (Tabelle 2) ist ersichtlich, dass mit diesem textilen Flächengebilde (Flächengewicht 1150 g/m², Luftdurchlässigkeit 170 l/(m²s)) eine breite Spanne an Mahlgraden (ausgedrückt über den D[4,3]-Wert) trotz zunehmender Brühdrücke eingesetzt werden kann. Mit Farbwerten zwischen 70 und 120 können hingegen keine sensorisch zufriedenstellenden Getränke erzielt werden.

**Tabelle 1: Verwendung von flächig-durchlässigen und porös-kaskadenartigen textilen Flächengebilden bei einem D[4,3]-Wert des Kaffees von 350 µm.**

| | **Eigenschaften des Kaffeepulvers** | | | | | **Eigenschaften des textilen Flächengebildes am Boden der Kapsel** | | | | **Eigenschaften des erhaltenen Heißgetränks** | | | | |
|---|---|---|---|---|---|---|---|---|---|---|---|---|---|---|
| Testreihe | Mahl-grad D4,3 [µm] | vonbis | bevorzugt | Farbe Colorette | Einwaage [g] | textiles Flächengebilde | a) Flächengewicht [g/qm] | b) Luftdurchlässigkeit [l/qms] | Kapselboden | Brühdruck [bar] | erzielbares Getränkevolumen [ml] | Crema | Geschmack | Ranking |
| 1 (Vergl.) | 350 | 300 - 400 | 325 - 375 | 70 - 120 | 7,5 - 8,5 | flachig-durchlässig | 70 | 2000 | geschlossen | 6,5 - 10,0 | 30 - 120 | ja | fruchtig - säuerliche, aromatische Röstnote, harmonische Süße | 5,0 - 6,0 |
| 2 | 350 | 300 - 400 | 325 - 375 | 70 - 120 | 7,5 - 8,5 | porös - kaskadenartig | 650 | 400 | offen | 4,0 - 6,0 | 100 - 150 | nein | kräftiger, voller Körper mit fruchtiger Säure, leichte Süße | 5,5 - 6,0 |
| 3 | 350 | 300 - 400 | 325 - 375 | 50 - 70 | 7,5 - 8,5 | porös - kaskadenartig | 650 | 400 | offen | 4,0 - 6,0 | 100 - 150 | nein | sauer, bitter, sehr kräftig, adstringierend | 3,0 - 4,0 |

**Tabelle 2: Verwendung von verschiedenen porös-kaskadenartigen textilen Flächengebilden.**

| | **Eigenschaften des Kaffeepulvers** | | | | | **Eigenschaften des txtilen Flächengebildes am Boden der Kapsel** | | | | **Eigenschaften des erhaltenen Heißgetränks** | | | | |
|---|---|---|---|---|---|---|---|---|---|---|---|---|---|---|
| Testreihe | Mahlgrad D4,3 [µm] | von - bis | bevorzugt | Farbe Colorette | Einwaage [g] | textiles Flachengebilde | a) Flächengewicht [g/qm] | b) Luftdurchlässigkeit [l/qms] | Kapselboden | Brühdruck [bar] | erzielbares Getränkevolumen [ml] | Crema | Geschmack | Ranking |
| 4 | 550 | 500 - 600 | 525 - 575 | 50 - 90 | 8,5 - 9,4 | porös-kaskadenartig | 650 | 400 | offen | 4,0 - 6,0 | 180 - 300 | flächig | aromatisch, voller Körper, angenehme Säure, leicht süßlich | 4,0 - 5,0 |
| 5 | 550 | 500 - 600 | 525 - 575 | 50 - 90 | 8,5 - 9,4 | porös-kaskadenartig | 760 | 281 | offen | 4,0 - 6,0 | 180 - 300 | wenig aber flächig | aromatisch, voller Körper, angenehme Säure, leicht süßlich | 4,0 - 5,0 |
| 6 | 550 | 500 - 600 | 525 - 575 | 50 - 90 | 8,5 - 9,4 | porös - kaskadenartig | 900 | 193 | offen | 4,0 - 6,0 | 180 - 300 | etwas | sauer, röstig, fehlende Süße, bitter | 2,5 - 3,5 |
| 7 | 550 | 500 - 600 | 525 - 575 | 50 - 90 | 8,5 - 9,4 | porös - kaskadenartig | 1000 | 160 | offen | 4,0 - 6,0 | 180 - 300 | sehr gering | sauer, röstig, fehlende Süße, bitter | 2,5 - 3,5 |
| 8 | 550 | 500 - 600 | 525 - 575 | 50 - 90 | 8.5-9.4 | porös - kaskadenartig | 2 x 650 | 400 | offen | 4,0 - 8,0 | 180 - 300 | nein | röstig-säuerlich, flacher Körper, bitter | 2,0 - 3,0 |
| 9 | 550 | 500 - 600 | 525-575 | 50 - 90 | 8,5 - 9,4 | porös - kaskadenartig | 1150 | 170 | offen | 4,0 - 6,0 | 180 - 300 | nein | voller, harmonischer Körper, leichte Süße | 6,0 |

**Tabelle 3: Verwendung eines porös-kaskadenartigen textilen Flächengebildes bei unterschiedlichen D[4,3]-Werten.**

| | **Eigenschaften des Kaffeepulvers** | | | | | **Eigenschaften des textilen Flächengebildes am Boden der Kapsel** | | | | **Eigenschaften des erhaltenen Heißgetränks** | | | | |
|---|---|---|---|---|---|---|---|---|---|---|---|---|---|---|
| Testreihe | Mahlgrad D4,3 [µm] | von - bis | bevorzugt | Farbe Colorette | Einwaage [g] | textiles Flächengebilde | a) Flächengewicht [g/qm] | b) Luftdurchlässigkeit [l/qms] | Kapselboden | Brühdruck [bar] | erzielbares Getränkevolumen [ml] | Crema | Geschmack | Ranking |
| 10 | 400 | 350 - 450 | 375-425 | 50-70 | 8,5-9,4 | porös - kaskadenartig | 1150 | 170 | offen | 6,0-8,0 | 180 - 300 | nein | aromatische Säure und Röstnote, voller Körper | 6,0 |
| 11 | 450 | 400 - 500 | 425 - 475 | 50 - 70 | 8,5 - 9,4 | porös - kaskadenartig | 1150 | 170 | offen | 6,0 - 8,0 | 180 - 300 | nein | fruchtig - aromatisch, harmonischer Körper, leicht säuerlich - blumig | 6,0 |
| 12 | 500 | 450 - 550 | 475 - 525 | 50 - 70 | 8,5 - 9,4 | porös - kaskadenartig | 1150 | 170 | offen | 6,0 - 8,0 | 180 - 300 | nein | fruchtig - aromatisch, harmonischer Körper, leicht säuerlich - blumig | 6,0 |

## Patentansprüche

1. Portionskapsel zur Herstellung eines Kaffeegetränks,
wobei die Portionskapsel einen Kapselgrundkörper aufweist, in welchem ein textiles Flächengebilde und eine Getränkesubstanz angeordnet sind,
wobei die Getränkesubstanz zur Aufbewahrung in der Portionskapsel und zur Extraktion in der Portionskapsel durch das textile Flächengebilde hindurch mittels druckbeaufschlagtem Heißwasser vorgesehen ist,
wobei die Getränkesubstanz in der Portionskapsel in einer Menge im Bereich von 1 bis 20 g vorliegt;
wobei die Getränkesubstanz im Wesentlichen pulverförmig ausgebildet ist, gerösteten, gemahlenen Kaffee umfasst, welcher im trockenen Zustand einen D[4,3]-Wert im Bereich von 500 bis 600 µm aufweist; und
wobei das textile Flächengebilde ein Flächengewicht von 900 bis 1400 g/m² aufweist,
wobei das textile Flächengebilde ein porös-kaskadenartiger Filz ist,
wobei der wobei der Kapselboden partiell offen ist.

## Claims

1. A single serve capsule for producing a coffee beverage,
wherein the single serve capsule has a capsule base body in which a textile fabric and a beverage substance are arranged,
wherein the beverage substance is provided for storage in the single serve capsule and for extraction in the single serve capsule through the textile fabric by means of pressurized hot water,
wherein the beverage substance is present in the single serve capsule in an amount in the range from 1 to 20 g;
wherein the beverage substance is substantially pulverulent, comprises roasted, ground coffee which in the dry state has a D[4,3] value in the range from 500 to 600 µm;
wherein the textile fabric has a weight per unit area in the range from 900 g/m² to 1400 g/m²;
wherein the textile fabric a porous-cascade-type felt; and
wherein the capsule base is partially open.

## Revendications

1. Capsule pour la préparation d'une boisson au café,
la capsule comprenant un corps de base de capsule dans lequel une structure textile plate et une substance de boisson sont agencées,
la substance de boisson étant prévue pour être conservée dans la capsule et pour être extraite de la capsule au travers de la structure textile plate au moyen d'eau chaude sous pression,
la substance de boisson étant présente dans la capsule en une quantité dans la plage allant de 1 à 20 g ;
la substance de boisson étant configurée essentiellement en poudre, comprenant du café torréfié moulu, qui présente à l'état sec une valeur D[4,3] dans la plage allant de 500 à 600 µm ; et
la structure textile plate présentant un poids superficiel de 900 à 1 400 g/m²,
la structure textile plate étant un feutre de type poreux en cascade,
le fond de la capsule étant partiellement ouvert.
